# EUROPEAN PATENT SPECIFICATION

(11) **EP 1 916 507 B1**
(45) Date of publication and mention of the grant of the patent: **03.12.2014**
(21) Application number: 06255492.8
(22) Date of filing: 25.10.2006
(51) Int. Cl.: G01J 3/02, G01J 3/28, G01J 3/36

(54) **Spectroscopic analyzing apparatus**
Vorrichtung zur spektroskopischen Analyse
Appareil d'analyse spectroscopique

(43) Date of publication of application: 30.04.2008
(73) Proprietor: HAMAMATSU PHOTONICS K. K., Hamamatsu-shi, Shizuoka 435-8558 (JP)
(72) Inventor: Kato, Hisaki, Hamamatsu-shi Shizuoka 435-8558 (JP)
(74) Representative: Boult Wade Tennant

(56) References cited:
- EP-A- 0 768 517
- WO-A-98/37389
- WO-A-2005/116595
- JP-A- 57 060 231
- US-A1- 2006 279 733

## Description

### BACKGROUND OF THE INVENTION

### Field of the Invention

The present invention relates to a spectroscopic analyzing apparatus applicable to spectroscopic analysis of light with a continuous spectrum over a broad wavelength range.

### Related Background Art

In general, a spectroscopic analyzing apparatus is used to perform qualitative analysis and quantitative analysis of elements contained in a sample. For example, a spectroscopic analyzing apparatus disclosed in Japanese Published Unexamined Patent Application No. 2001-159610 comprises a diffraction grating (spectroscope) for spectrally diffracting emitted light or fluorescent light from the sample, and a plurality of detectors prepared for the respective specific wavelength components. A multi-anode type photomultiplier, in which plural anodes is provided in connection with the light incident positions, is applied to a spectroscopic analyzing apparatus disclosed in WO2003/004982. In the multi-anode type photomultiplier as described above, photodetecting regions are arranged linearly or two-dimensionally, and the outputs corresponding to the light incident positions can be obtained. In particular, in the multi-anode type photomultiplier having the photodetecting regions arranged linearly, outputs of about 8 to 32 channels can be obtained in general. Therefore, a continuous spectrum can be detected by guiding the wavelength components from the spectroscope to the photodetecting face of the multi-anode type photomultiplier although the wavelength range is limited. In other words, the multi-anode type photomultiplier has the same function as the construction that a plurality of photomultipliers are provided in connection with the respective channels, and for example, when the anodes are linearly arranged, the multi-anode type photomultiplier can function as a line sensor.

EP-A-0768517 discloses an imaging spectrometer in which a conventional grating is replaced with an array of prisms defining a dispersion element. This array linearizes the linear dispersing of the incident light across an expanded wavelength range.

WO-A-98/37389 shows an imaging spectrometer with prismatic dispersing elements in the optical path between an entrance slit and a detector, to address non-uniformity of resolution particularly in 2 timensions.

WO-A-2005/116595 describes a spectrometer that receives separate incident beams associated with separate spectral ranges, combines these for transmission through the spectrometer and then spectrally separates them after traversal, for spatially separate detection of different spectral ranges.

JP-A-57 060231 discloses a spectrometer in accordance with the precharacterising portion of claim 1.

### SUMMARY OF THE INVENTION

The inventors have studied the prior art described above in detail, and as a result, have found problems as follows.

Namely, when a continuous spectrum over a broad wavelength range which cannot be covered by one detector is detected, it is necessary to arrange a plurality of detectors which are similar to a detector (multi-anode type photomultiplier) of a spectroscopic analyzing apparatus disclosed in the above-mentioned WO2003/004982.

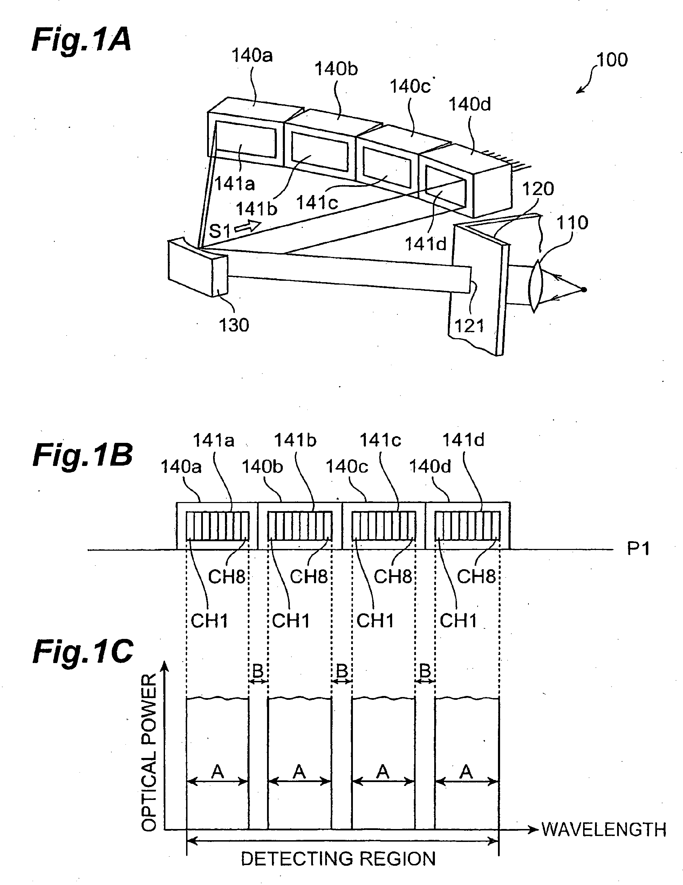

Figs. 1A and 1B are diagrams showing the construction of a spectroscopic analyzing apparatus 100 according to a comparative example that is newly prepared by the inventor to explain the problem of the prior art. As shown in Fig. 1A, the spectroscopic analyzing apparatus 100 according to the comparative example comprises a collimate lens 110 for collimating emitted light or fluorescent light from a sample, a light shielding plate 120 having a slit 121, a diffraction grating 130 (a reflection type spectroscope) for reflecting wavelength components included in light beam passing through the slit 121 at inherent angles to separate the wavelength components from each other, and a plurality of detectors 140a to 140d respectively taking charge of the associated wavelength ranges divided from the detecting region. Fig. 1B is a diagram showing the plurality of detectors 140a to 140d when observed in the direction from the diffraction grating 130 to the plurality of detectors 140a to 140d, that is, in the direction indicated by an arrow S1 of Fig. 1A. The plurality of detectors 140a to 140d respectively have photodetecting faces 141a to 141d, and the plurality of detectors 140a to 140d are arranged so as to be perpendicular to the reference plane P1. Each of the photodetecting faces 141a to 141d is divided into eight parts for a first channel CH1 to an eighth channel CH8.

However, since an insensitive region exists around each of the photodetecting faces 141 a to 141 d of the plurality of detectors 140a to 140d, the spectrum detected by these plurality of detectors 140a to 140d has such a shape that a sensitive region A and an insensitive region B alternately appear, as shown in Fig. 1C. Therefore, the spectroscopic analyzing apparatus according to the comparative example shown in Figs. 1A and 1B has a problem that the spectroscopic analyzing apparatus cannot detect a continuous spectrum.

In order to overcome the above-mentioned problems, it is an object of the present invention to provide a spectroscopic analyzing apparatus having a structure for enabling detection of a continuous spectrum over a broad wavelength range.

A spectroscopic analyzing apparatus according to the present invention is defined by claim 1.

By providing the direction changers in connection with one or more detectors as described above, it is possible to individually change the arrangement of each detector. In this case, the positions of all detectors can be adjusted such that all wavelength components separated by the spectroscope or arbitrarily-selected desired wavelength components do not reach the insensitive regions of any detectors. Accordingly, even in the case of spectroscopic analysis of light with a continuous spectrum over a broader wavelength range than the wavelength range detectable by one detector, the wavelength components separated by the spectroscope can reach the photodetecting face of any detector. Conversely, the arrangement of the detectors can be adjusted so that a desired wavelength component can be guided to the photodetecting face of any detector, and also an unnecessary wavelength component is guided to an insensitive region (wavelength range to be detected can be freely selected).

In the spectroscopic analyzing apparatus according to the present invention, the spectroscope may be constituted by a lens optical system, however, it is preferable that the spectroscopic analyzing apparatus includes a reflection type diffraction grating for reflecting the wavelength components included in incident light at an angle inherent to each of the wavelength components. This is because the entire spectroscopic analyzing apparatus can be miniaturized. Furthermore, it is preferable that each of the detectors includes a multi-anode type photomultiplier provided with a plurality of anodes in conformity with the light incident positions. In this case, in addition to the miniaturization of the entire spectroscopic analyzing apparatus, each detector can function as a line sensor, and thus a continuous spectrum over a broad range can be efficiently detected.

In the second embodiment, at least one of the direction changers may include a mirror reflector. Also in this case, each direction changer corresponding to the mirror reflector is fixed to the detector while covering the photodetecting face of the detector belonging to one of the first and second groups, whereby the entire spectroscopic analyzing apparatus can be miniaturized.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter.

However, it should be understood that the detailed description and specific examples, while indicating preferred embodiments of the invention, are given by way of illustration only, since various changes and modifications within the scope of the invention will be apparent to those skilled in the art from this detailed description.

### BRIEF DESCRIPTION OF THE DRAWINGS

Figs. 1A to 1C are diagrams showing the structure of a spectroscopic analyzing apparatus according to a comparative example, and show a detected spectrum;

Figs. 2A to 2C are diagrams showing a configuration of a first embodiment of a spectroscopic analyzing apparatus according to the present invention;

Figs. 3A and 3B are diagrams showing the arrangement of detectors in the spectroscopic analyzing apparatus according to the first embodiment, and shows a detected spectrum;

Figs. 4A and 4B are diagrams showing a configuration of a second embodiment of the spectroscopic analyzing apparatus of the present invention; and

Figs. 5A and 5B are diagrams showing the arrangement of the detectors in the spectroscopic analyzing apparatus of the second embodiment, and show a detected spectrum.

### DETAILED DESCRIPTION OF THE PREFERRED EMBODIMENTS

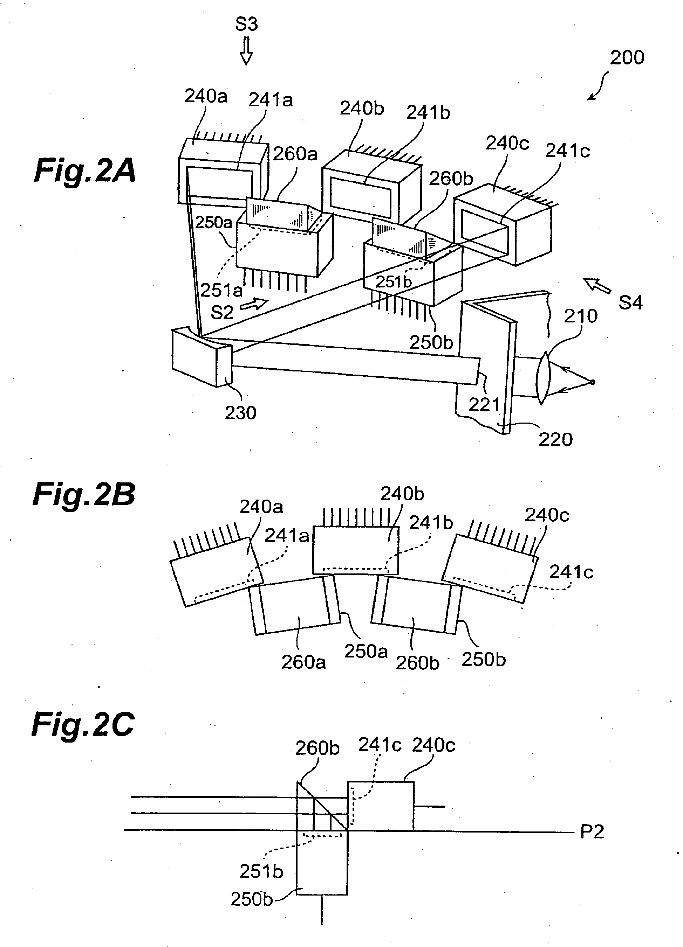

In the following, embodiments of a spectroscopic analyzing apparatus according to the present invention will be explained in detail with reference to Figs. 2A to 5B. In the explanation of the drawings, constituents identical to each other will be referred to with numerals identical to each other without repeating their overlapping descriptions.

(First Embodiment)

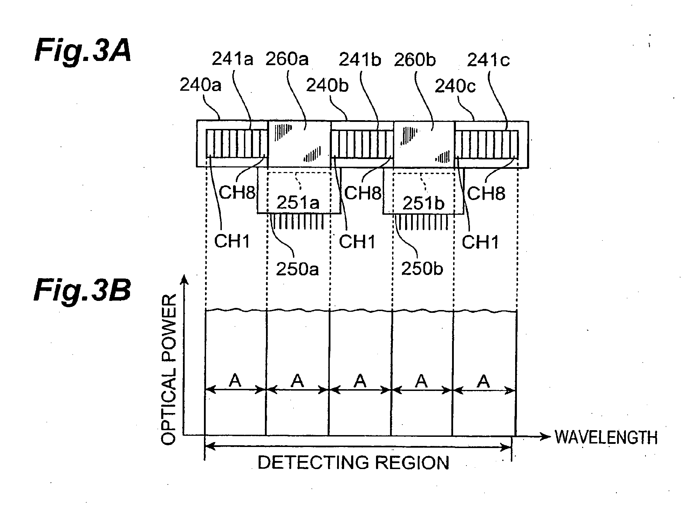

First, a first embodiment of a spectroscopic analyzing apparatus according to the present invention will be explained with reference to Figs. 2A to 3B. Fig. 2A is a perspective view showing the configuration of the first embodiment of the spectroscopic analyzing apparatus according to the present invention, Fig. 2B is a plan view showing the arrangement of detectors when observed in the direction indicated by an arrow S3 of Fig. 2A, and Fig. 2C is a side view showing the arrangement of the detectors when observed in the direction indicated by an arrow S4 of Fig. 2A. Fig. 3A is a front view showing the arrangement of the detectors when observed in the direction indicated by an arrow S2 of Fig. 2A, and Fig. 3B shows a detected spectrum in connection with the arrangement of the detectors shown in Fig. 3A.

As in the case of the comparative example described above, the spectroscopic analyzing apparatus 200 according to the first embodiment comprises a collimate lens 210, a light shielding plate 220 having a slit 221, a diffraction grating 230 as a spectroscope; and a plurality of detectors 240a to 240c and 250a to 250b respectively having photodetecting faces 241a to 241c and 251a to 251b. In the first embodiment, however, prism assemblies 260a and 260b (triangular prisms) are further provided as direction changers for changing the propagation direction of wavelength components that respectively propagate to the detectors 250a and 250b, whereby the detectors 240a to 240c and 250a to 250b are arranged such that all wavelength components separated by the diffraction grating 230 do not reach insensitive regions of the detectors 240a to 240c and 250a to 250b.

As described above, the prism assemblies 260a and 260b as the direction changers are respectively arranged on the optical paths of the wavelength components that propagate from the diffraction grating 230 to the corresponding detectors 250a and 250b, and function to change the propagation directions of the wavelength components concerned. Therefore, even in the case of spectroscopic analysis of light with a continuous spectrum with a broader wavelength range than the wavelength range detectable by one detector, each of all wavelength components separated by the diffraction grating 230 can reach the photodetecting faces 241a to 241c and 251a to 251b of any one of the detectors 240a to 240c and 250a to 250b.

That is, in accordance iwth the first embodiment, as the arrangement of the detectors 240a to 240c and 250a to 250b in which all wavelength components separated by the diffraction grating 230 are prevented from reaching any insensitive region, as shown in Fig. 2B, the detectors 240a to 240c are classified into a first group, and the detectors 250a to 250b are classified into a second group. These first and second groups are set such that the lengths of line segments when the optical paths of the wavelength components separated by the diffraction grating 230 are projected onto a reference plane P2 (see Fig. 2C) are different between the first and second groups. In the first embodiment, the length of the projected line segment of the first group is set to be longer than the length of the projected line segment of the second group.

Here, the prism assemblies 260a and 260b are fixed to the detectors 250a and 250b belonging to the second group under the state that the respective photodetecting faces 251a and 251b are covered by the prism assemblies 260a and 260b, and thereby the detectors 240a to 240c and 250a to 250b are arranged as shown in Fig. 2C. That is, the detectors 240a to 240c belonging to the first group are arranged such that the photodetecting faces 241 a to 241 c are perpendicular to the reference plane P2, and the detectors 250a and 250b belonging to the second group are arranged such that the photodetecting faces 251a and 251b are made coincident with the reference plane P2. By applying the prism assemblies 260a and 260b to the detectors 250a and 250b belonging to the second group, the optical path lengths of the wavelength components directing from the diffraction grating 230 to the centers of the respective photodetecting faces can be made coincident with each other even when the lengths of the line segments of the optical paths projected on the reference plane P2 are different from each other.

At this time, the detectors 240a to 240c and 250a to 250b are arranged such that each of all wavelength components separated by the diffraction grating 230 can reach one of the photodetecting faces 241 a to 241c and 251a to 251 b as shown in Fig. 3A. Accordingly, the continuous spectrum over the overall detecting region as shown in Fig. 3B can be detected by the spectroscopic analyzing apparatus 200 according to the first embodiment.

In the first embodiment, the prism assemblies 260a and 260b are applied as the direction changers. However, the same effect can be achieved by applying a mirror reflector.

### (Second Embodiment)

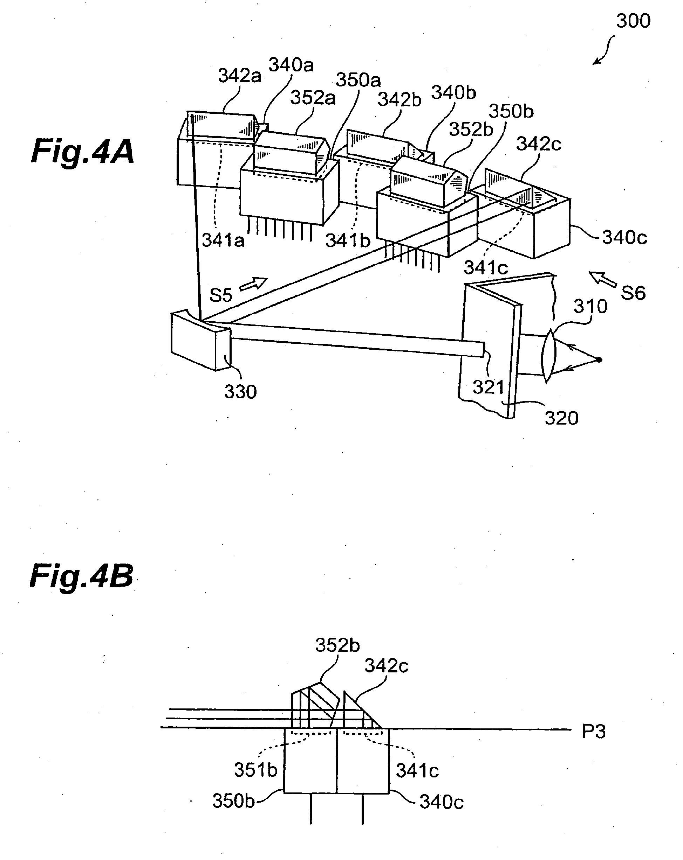

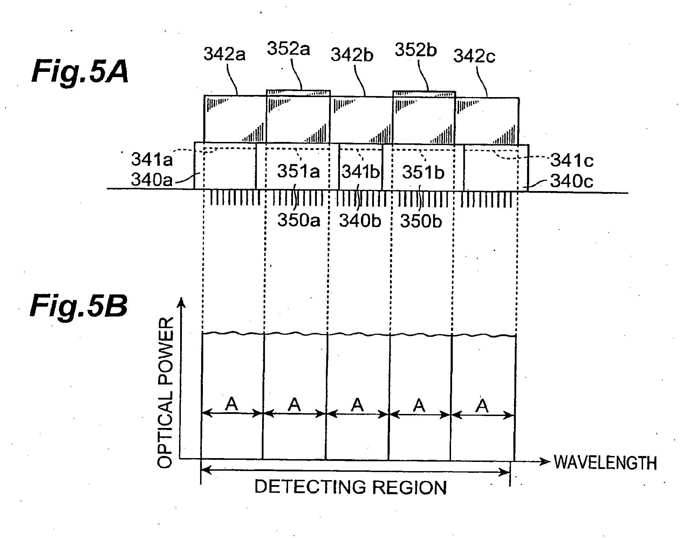

Next, a second embodiment of the spectroscopic analyzing apparatus according to the present invention will be explained with reference to Figs. 4A to 5B. Fig. 4A is a perspective view showing a configuration of the second embodiment of the spectroscopic analyzing apparatus according to the present invention, and Fig. 4B is a plan view showing the arrangement of the detectors when observed in the direction indicated by an arrow S6 of Fig. 4A. Fig. 5A is a front view showing the arrangement of the detectors when observed in the direction indicated by an arrow S5 of Fig. 4A, and Fig. 5B shows a detected spectrum in connection with the arrangement of the detectors shown in Fig. 5A.

The spectroscopic analyzing apparatus 300 according to the second embodiment comprises a collimator lens 310, a light shielding plate 320 having a slit 321, a diffraction grating 330 as a spectroscope, and a plurality of detectors 340a to 340c and 350a to 350b respectively having photodetecting faces 341a to 341c and 351a to 351b as in the case of the first embodiment. However, the second embodiment is different from the first embodiment in that the plurality of detectors 340a to 340c and 350a to 350b are arranged such that the photodetecting faces 341a to 341c, 351a to 351b are made coincident with the reference plane P3 (see Fig. 4B).

Furthermore, in the second embodiment, as in the case of the first embodiment, the detectors 340a to 340c are classified into a first group, and the detectors 350a to 350b are classified into the second group. The first and second groups are set such that the lengths of the line segments when the respective optical paths of the wavelength components separated by the diffraction grating 330 are projected onto the reference plane P3 (see Fig. 4B) are different between the first and second groups. In the second embodiment, the length of the projected line segment of the first group is set to be longer than that of the second group.

Here, in accordance with the second embodiment, in order to adjust the difference in optical path length among the respective wavelength components which is caused by the difference in the length of the projected line segments, first prism assemblies 342a to 342c (triangular prisms) are fixed to the detectors 340a to 340c belonging to the first group while covering the photodetecting faces 341a to 341c thereof. On the other hand, second prism assemblies 352a and 352b (pentangular prisms or assemblies each of which is constituted by attaching a plurality of triangular prisms) are fixed to the detectors 350a and 350b belonging to the second group while covering the photodetecting faces 351a and 351b. The first prism assemblies 342a to 342c and the second prism assemblies 352a and 352b are prism assemblies in which the optical path lengths of light propagating therethrough are different from each other. In the second embodiment, by increasing the propagation distances of the second prism assemblies 352a and 252b fixed to the detectors belonging to the second group nearer to the diffraction grating 330, the optical path lengths of the wavelength components directing from the diffraction grating 330 to the centers of the respective photodetecting faces can be made coincident with each other even when the line segment lengths of the optical paths projected onto the reference plane 3 are different from one another. That is, the second prism assemblies 352a and 352b are designed to have such a shape that light is reflected only twice in the second prism assemblies 352a and 352b. Therefore, the second prism assemblies 352a and 352b themselves have a function of adjusting the optical path lengths of the corresponding wavelength components.

At this time, the detectors 340a to 340c and 350a to 350b are arranged as shown in Fig. 4B. That is, the detectors 340a to 340c belonging to the first group and the detectors 350a and 350b belonging to the second group are arranged such that the respective photodetecting faces 341a to 341c and 351a to 351b are made coincident with the reference plane P3.

In accordance with the above-mentioned configuration, the detectors 340a to 340c and 350a to 350b are arranged such that each of all wavelength components separated by the diffraction grating 330 can reach one of the photodetecting faces 341a to 341c and 351a to 351b. Accordingly, by the spectroscopic analyzing apparatus 300 according to the second embodiment, the continuous spectrum over the whole detecting region as shown in Fig. 5B can also be detected.

Even in the second embodiment, the first prism assemblies 342a to 342c and the second prism assemblies 352a and 352b are applied as the direction changers, however, the same effect can be achieved even when the mirror reflector is applied.

As described above, in accordance with the spectroscopic analyzing apparatus according to the present invention, spectroscopic analysis can be performed not only on faint light such as emitted light or fluorescent light from a sample, but also on light having a continuous spectrum over a wavelength range which is too broad to be covered by one detector.

## Claims

1. A spectroscopic analyzing apparatus (200, 300) configured to detect a continuous spectrum over a detection wavelength range sufficiently broad that it cannot be covered by a single detector, comprising:
a spectroscope (230, 330) for separating incident light into a plurality of wavelength components;
a plurality of detectors (240a-240c; 250a-250b; 340a-340c; 350a-350b) each arranged to detect the wavelength components included in an associated one of a plurality of wavelength ranges that are sub divided from the detection wavelength range, said detectors being arranged such that optical path lengths from said spectroscope (230, 330) to respective centres of photodetecting faces of said detectors are identical; and
direction changers (260a-260b; 342a-242c; 352a-352c) provided in connection with one or more detectors among said plurality of detectors (240a-240c; 250a-250b; 340a-340c; 350a-350b), said direction changers being arranged on optical paths of the wavelength components that propagate from said spectroscope to said associated detectors, and functioning to change the propagation direction of the wavelength components, **characterized in that**:
said plurality of detectors (240a-240c; 250a-250b; 340a-340c; 350a-350b) are respectively classified into first and second groups differing from each other **in that** the lengths of line segments defined by projecting the optical paths of the wavelength components propagating from said spectroscope (230; 330) to an associated detector onto a predetermined reference plane (P2; P3) are different, and said plurality of detectors (240a-240c; 250a-250b; 340a-340c; 350a-350b) are respectively arranged so as to prevent the wavelength components separated by said spectroscope (230, 330) from reaching insensitive regions of said plurality of detectors (240a-240c; 250a-250b; 340a-340c; 350a-350b), by using the function of said direction changers (260a-260b; 342a-342c; 352a-352b), according to:
a first arrangement in which the detectors (240a-240c) belonging to the first group are arranged such that the photodetecting faces (241a-241c) thereof are perpendicular to the reference plane (P2) and the detectors (250a-250b) belonging to the second group are arranged such that the photodetecting faces (251a-251b) thereof are made coincident with the predetermined reference plane (P2); or
a second arrangement in which said plurality of detectors (340a-340c; 350a-350b) belonging to both the first and second groups are arranged such that the photodetecting faces (31a-31c; 35a-351b) thereof are made coincident with the predetermined reference plane (P3); wherein
each of the said direction changers (260a-260b), in the first arrangement, includes a prism assembly or a mirror reflector which is fixed to the associated detector (250a-250b) belonging to the second group while covering the photodecting face (251a-251b) of the associated detector (250a-250b), and
each of said direction changers (342a-342c; 352a-352b), in the second arrangement, includes one of a first prism assembly which is fixed to the associated detector (340a-340c) belonging to the first group while covering the photodetecting face (341a-341c) of the associated detector (340a-340c), and a second prism assembly which is fixed to the associated detector (350a-350b) belonging to the second group while covering the photodetecting face (351a-351b) of the associated detector (350a-350b), said first and second prism assemblies being different from each other **in that** the optical path lengths of light propagating therethrough are different from each other.

2. A spectroscopic analyzing apparatus according to claim 1, wherein said spectroscope (230, 330) includes a reflection type diffraction grating for reflecting the wavelength components contained in the incident light at the respective angles inherent to the wavelength components.

3. A spectroscopic analyzing apparatus according to claim 1, wherein each of said plurality of detectors (260a-260b; 342a-242c; 352a-352c) includes a multi-anode type photomultiplier in which a plurality of anodes are provided in connection with light incident positions.

4. A spectroscopic analyzing apparatus according to claim 1, wherein, in the second arrangement, at least one of said direction changers (342a-342c; 352a-352b) includes a mirror reflector.

5. A spectroscopic analyzing apparatus according to claim 4, wherein said direction changers (342a-342c; 352a-352b) corresponding to the mirror reflectors are respectively fixed to associated detectors (340a-340c; 350a-350b) belonging to one of the first and second groups while covering the photodetecting faces (341a-341c; 351; 351b) of the associated detector (340a-340c; 350a-350b).

## Patentansprüche

1. Spektroskopische-Analyse-Vorrichtung (200, 300), die dazu konfiguriert ist, ein kontinuierliches Spektrum über einen Detektion-Wellenlängenbereich zu detektieren, der hinreichend breit ist, so dass er nicht durch einen einzelnen Detektor abgedeckt werden kann, umfassend:
ein Spektroskop (230, 330), um einfallendes Licht in eine Mehrzahl von Wellenlängen-Komponenten aufzuteilen,
eine Mehrzahl von Detektoren (240a-240c; 250a-250b; 340a-340c; 350a-350b), die jeweils dazu angeordnet sind, die Wellenlängen-Komponenten zu detektieren, die in einem zugeordneten aus einer Mehrzahl von Wellenlängen-Bereichen enthalten sind, die aus dem Detektion-Wellenlängenbereich unterteilt sind, wobei die Detektoren so angeordnet sind, dass optische Weglängen von dem Spektroskop (230, 330) zu jeweiligen Zentren von photodetektierenden Flächen der Detektoren identisch sind, und
Richtungswechsler (260a-260b; 342a-242c; 352a-352c), die in Verbindung mit einem oder mehreren Detektoren aus der Mehrzahl von Detektoren (240a-240c; 250a-250b; 340a-340c; 350a-350b) vorgesehen sind, wobei die Richtungswechsler auf optischen Wegen der Wellenlängen-Komponenten angeordnet sind, die sich von dem Spektroskop zu den zugeordneten Detektoren ausbreiten, und dazu fungieren, die Ausbreitungsrichtung der Wellenlängen-Komponenten zu ändern, **dadurch gekennzeichnet, dass**
die Mehrzahl von Detektoren (240a-240c; 250a-250b; 340a-340c; 350a-350b) jeweils in eine erste und eine zweite Gruppe klassifiziert sind, die sich voneinander dadurch unterscheiden, dass die Längen von Linien-Segmenten verschieden sind, die durch Projektion der optischen Wege der sich von dem Spektroskop (230; 330) zu einem zugeordneten Detektor ausbreitenden Wellenlängen-Komponenten auf eine vorbestimmte Referenz-Ebene (P2; P3) definiert sind, und wobei die Mehrzahl von Detektoren (240a-240c; 250a-250b; 340a-340c; 350a-350b) jeweils dazu angeordnet sind, zu verhindern, dass die durch das Spektroskop (230, 330) aufgeteilten Wellenlängen-Komponenten unempfindliche Bereiche von der Mehrzahl von Detektoren (240a-240c; 250a-250b; 340a-340c; 350a-350b) erreichen, indem die Funktion der Richtungswechsler (260a-260b; 342a-342c; 352a-352b) eingesetzt wird, nämlich gemäß:
einer ersten Anordnung, in welcher die zu der ersten Gruppe gehörenden Detektoren (240a-240c) so angeordnet sind, dass die photodetektierenden Flächen (241a-241c) davon orthogonal zu der Referenz-Ebene (P2) verlaufen, und die zu der zweiten Gruppe gehörenden Detektoren (250a-250b) so angeordnet sind, dass die photodetektierenden Flächen (251a-251b) davon mit der Referenz-Ebene (P2) koinzident gemacht werden, oder
einer zweiten Anordnung, in der die Mehrzahl von Detektoren (340a-340c; 350a-350b), die zu beiden, der ersten und der zweiten Gruppe gehören, so angeordnet sind, dass die photodetektierenden Flächen (341a-341c; 351a-351b) davon koinzident mit der vorbestimmten Referenz-Ebene (P3) gemacht werden, wobei
jeder der Richtungswechsler (260a-260b) in der ersten Anordnung eine Prismen-Anordnung oder einen Spiegel-Reflektor umfasst, die bzw. der an dem zu der zweiten Gruppe gehörenden, zugeordneten Detektor (250a-250b) fixiert ist, während sie bzw. er die photodetektierende Fläche (251a-251b) des zugeordneten Detektors (250a-250b) abdeckt, und
jeder der Richtungswechsler (342a-342c; 352a-352b) in der zweiten Anordnung eine aus einer ersten Prismen-Anordnung, die an dem zu der ersten Gruppe gehörenden, zugeordneten Detektor (340a-340c) fixiert ist, während sie die photodetektierende Fläche (341 a-341 c) des zugeordneten Detektors (340a-340c) abdeckt, und einer zweiten Prismen-Anordnung umfasst, die an dem zu der zweiten Gruppe gehörenden, zugeordneten Detektor (350a-350b) fixiert ist, während sie die photodetektierende Fläche (351 a-351 b) des zugeordneten Detektors (350a-350b) abdeckt, wobei die erste und die zweite Prismen-Anordnung sich dadurch voneinander unterscheiden, dass die optischen Weglängen von Licht unterschiedlich sind, welches sich dort hindurch ausbreitet.

2. Spektroskopische-Analyse-Vorrichtung nach Anspruch 1,
wobei das Spektroskop (230; 330) ein Beugungsgitter vom Reflexion-Typ umfasst, um die in dem einfallenden Licht enthaltenden Wellenlängen-Komponenten zu reflektieren, unter den jeweiligen, für die Wellenlängen-Komponenten inhärenten Winkeln.

3. Spektroskopische-Analyse-Vorrichtung nach Anspruch 1,
wobei jeder aus der Mehrzahl von Detektoren (260a-260b; 342a-242c; 352a-352c) einen Photovervielfacher vom Multi-Anoden-Typ umfasst, bei dem eine Mehrzahl von Anoden in Verbindung mit Licht-Einfall-Positionen vorgesehen sind.

4. Spektroskopische-Analyse-Vorrichtung nach Anspruch 1,
wobei bei der zweiten Anordnung wenigstens einer der Richtungswechsler (342a-342c; 352a-352b) einen Spiegel-Reflektor umfasst.

5. Spektroskopische-Analyse-Vorrichtung nach Anspruch 4,
wobei die den Spiegel-Reflektoren entsprechenden Richtungswechsler (342a-342c; 352a-352b) jeweils an zugeordneten Detektoren (340a-340c; 350a-350b) fixiert sind, die zu einer aus der ersten und zweiten Gruppe gehören, während sie die photodetektierenden Flächen (341 a-341 c; 351; 351 b) des zugeordneten Detektors (340a-340c; 350a-350b) abdecken.

## Revendications

1. Appareil d'analyse spectroscopique (200, 300) configuré pour détecter un spectre continu sur une plage de longueurs d'onde de détection suffisamment large qu'elle ne peut pas être couverte par un seul détecteur, comprenant :
un spectroscope (230, 330) pour séparer la lumière incidente en une pluralité de composantes de longueur d'onde ;
une pluralité de détecteurs (240a-240c ; 250a-250b ; 340a-340c ; 350a-350b), chacun agencé pour détecter les composantes de longueur d'onde comprises dans une plage de longueurs d'onde associée d'une pluralité de plages de longueurs d'onde qui sont subdivisées à partir de la plage de longueurs d'onde de détection, lesdits détecteurs étant agencés de sorte que des longueurs de chemin optique à partir dudit spectroscope (230, 330) jusqu'à des centres respectifs de faces de photodétection desdits détecteurs soient identiques ; et
des modificateurs de direction (260a-260b ; 342a-242c ; 352a-352c) prévus en association avec un ou plusieurs détecteur(s) parmi ladite pluralité de détecteurs (240a-240c ; 250a-250b ; 340a-340c ; 350a-350b), lesdits modificateurs de direction étant agencés sur des chemins optiques des composantes de longueur d'onde qui se propagent à partir dudit spectroscope jusqu'auxdits détecteurs associés, et fonctionnant pour modifier la direction de propagation des composantes de longueur d'onde,
**caractérisé en ce que** :
ladite pluralité de détecteurs (240a-240c ; 250a-250b ; 340a-340c ; 350a-350b) sont respectivement classés en des premier et deuxième groupes qui diffèrent l'un de l'autre par le fait que les longueurs de segments de ligne définis en projetant les chemins optiques des composantes de longueur d'onde se propageant à partir dudit spectroscope (230 ; 330) jusqu'à un détecteur associé sur un plan de référence prédéterminé (P2 ; P3) sont différentes les unes des autres, et ladite pluralité de détecteurs (240a-240c ; 250a-250b ; 340a-340c ; 350a-350b) sont respectivement agencés de manière à empêcher les composantes de longueur d'onde séparées par ledit spectroscope (230, 330) d'atteindre des régions insensibles de ladite pluralité de détecteurs (240a-240c ; 250a-250b ; 340a-340c ; 350a-350b), en utilisant la fonction desdits modificateurs de direction (260a-260b ; 342a-342c ; 352a-352b) conformément à :
un premier agencement dans lequel les détecteurs (240a-240c) appartenant au premier groupe sont agencés de sorte que les faces de photodétection (241a-241c) de ceux-ci soient perpendiculaires au plan de référence (P2) et les détecteurs (250a-250b) appartenant au deuxième groupe sont agencés de sorte que les faces de photodétection (251a-251b) de ceux-ci soient amenées en coïncidence avec le plan de référence prédéterminé (P2) ; ou
un deuxième agencement dans lequel ladite pluralité de détecteurs (340a-340c ; 350a-350b) appartenant à la fois aux premier et deuxième groupes sont agencés de sorte que les faces de photodétection (341a -341c ; 351a-351b) de ceux-ci soient amenées en coïncidence avec le plan de référence prédéterminé (P3) ; où
chacun desdits modificateurs de direction (260a-260b), dans le premier agencement, comporte un ensemble de prisme ou un miroir-réflecteur qui est fixé au détecteur associé (250a-250b) appartenant au deuxième groupe tout en couvrant la face de photodétection (251a-251b) du détecteur associé (250a-250b), et
chacun desdits modificateurs de direction (342a-342c ; 352a-352b), dans le deuxième agencement, comporte l'un d'un premier ensemble de prisme qui est fixé au détecteur associé (340a-340c) appartenant au premier groupe tout en couvrant la face de photodétection (341a-341c) du détecteur associé (340a-340c), et d'un deuxième ensemble de prisme qui est fixé au détecteur associé (350a-350b) appartenant au deuxième groupe tout en couvrant la face de photodétection (351a-351b) du détecteur associé (350a-350b), lesdits premier et deuxième ensembles de prisme étant différents l'un de l'autre par le fait que les longueurs de chemin optique de la lumière se propageant à travers ceux-ci sont différentes les unes des autres.

2. Appareil d'analyse spectroscopique selon la revendication 1, dans lequel ledit spectroscope (230, 330) comporte un réseau de diffraction du type à réflexion pour réfléchir les composantes de longueur d'onde contenues dans la lumière incidente à des angles respectifs inhérents aux composantes de longueur d'onde.

3. Appareil d'analyse spectroscopique selon la revendication 1, dans lequel chacun de ladite pluralité de détecteurs (260a-260b ; 342a-242c ; 352a-352c) comporte un photomultiplicateur du type multi-anode dans lequel une pluralité d'anodes sont prévues en association avec des positions d'incidence de lumière.

4. Appareil d'analyse spectroscopique selon la revendication 1, dans lequel, dans le deuxième agencement, au moins l'un desdits modificateurs de direction (342a-342c ; 352a-352b) comporte un miroir-réflecteur.

5. Appareil d'analyse spectroscopique selon la revendication 4, dans lequel lesdits modificateurs de direction (342a-342c ; 352a-352b) correspondant au miroirs-réflecteurs sont fixés respectivement à des détecteurs associés (340a-340c ; 350a-350b) appartenant à l'un des premier et deuxième groupes tout en couvrant les faces de photodétection (341a-341c ; 351 ; 351b) du détecteur associé (340a-340c ; 350a-350b).
